# EUROPÄISCHE PATENTANMELDUNG

(11) **EP 3 785 506 A1**
(43) Veröffentlichungstag der Anmeldung: **03.03.2021**
(21) Anmeldenummer: 20183662.4
(22) Anmeldetag: 02.07.2020
(51) Int. Cl.: A01B 79/00, G06Q 10/06, G07C 5/04

(54) **VERFAHREN ZUR AUTOMATISCHEN ERSTELLUNG EINER DOKUMENTATIONSBUCHUNG**

(30) Priorität: 28.08.2019 DE 102019123092
(71) Anmelder: 365FarmNet Group KGaA mbh & Co KG, 33428 Harsewinkel (DE)
(72) Erfinder: Kasseck, Robert, 16515 Oranienburg (DE)
(74) Vertreter: CLAAS Gruppe

(57) **Zusammenfassung**

Verfahren zur automatischen Erstellung einer Dokumentationsbuchung, wobei in der Dokumentationsbuchung eine Arbeit einer landwirtschaftlichen Arbeitsmaschine dokumentiert wird, wobei während der Erbringung der Arbeit Arbeitsdaten erfasst werden, wobei ein Ortsbestimmungssystem während der Erbringung der Arbeit eine Bewegungsspur der Arbeitsmaschine aufzeichnet, wobei die Arbeitsdaten zumindest die Bewegungsspur umfassen, wobei basierend auf den Arbeitsdaten automatisch die erbrachte Arbeit einer Klasse zugeordnet wird, wobei die Klasse der erbrachten Arbeit automatisch in die Dokumentationsbuchung eingefügt wird.

## Beschreibung

Die vorliegende Erfindung beschäftigt sich mit der automatischen Erstellung einer Dokumentationsbuchung für die Arbeit einer landwirtschaftlichen Arbeitsmaschine. Unter landwirtschaftlichen Arbeitsmaschinen sind insbesondere selbstfahrende landwirtschaftliche Arbeitsmaschinen wie Traktoren, Mähdrescher und Feldhäcksler zu verstehen.

Die Dokumentation von Arbeitsprozessen in der Landwirtschaft erhält eine immer größere Bedeutung. Dies ergibt sich zum einen aus dem Erfordernis der Nachvollziehbarkeit von geleisteter Tätigkeit im Bereich von Lohnunternehmen und in Großbetrieben mit mehreren Mitarbeitern. Zum anderen ergibt sich ebenso aus der zunehmenden gesetzlichen Nachweispflicht jedes Landwirtes insbesondere im Bereich Düngung und Pflanzenschutz ein Erfordernis der Dokumentation.

Aus dem Stand der Technik sind Dokumentationssysteme bekannt, die einige Arbeitsdaten speichern und dem Bediener der Arbeitsmaschine die Dokumentation erleichtern. Der Bediener muss allerdings noch viele Daten manuell dokumentieren, was aufwändig und fehleranfällig ist.

Ein Verfahren zur Speicherung von Daten eines Arbeitsprozesses einer landtechnischen Maschine ist aus der DE102017105493A1 bekannt.

Ein elektronisches Zeitmanagementsystem das den Zeitraum sowie die überfahrene Fläche automatisch dokumentiert ist aus der DE102014108644A1 bekannt.

Aufgabe der Erfindung ist es die Erstellung einer Dokumentationsbuchung weitgehend zu automatisieren.

Die Aufgabe wird gelöst durch ein Verfahren zur automatischen Erstellung einer Dokumentationsbuchung, wobei in der Dokumentationsbuchung eine Arbeit einer landwirtschaftlichen Arbeitsmaschine dokumentiert wird, wobei während der Erbringung der Arbeit Arbeitsdaten erfasst werden, wobei ein Ortsbestimmungssystem während der Erbringung der Arbeit eine Bewegungsspur der Arbeitsmaschine aufzeichnet, wobei die Arbeitsdaten zumindest die Bewegungsspur umfassen, wobei basierend auf den Arbeitsdaten automatisch die erbrachte Arbeit einer Klasse zugeordnet wird, wobei die Klasse der erbrachten Arbeit automatisch in die Dokumentationsbuchung eingefügt wird.

Das Ortsbestimmungssystem ist dabei bevorzugt ein Smartphone, das vom Bediener der Arbeitsmaschine während der Arbeit mitgeführt wird. Alternativ kann das Ortsbestimmungssystem in oder an der Arbeitsmaschine verbaut sein. Smartphones umfassen häufig einen Empfänger für ein Satellitennavigationssystem mit dem die aktuelle Position bestimmt werden kann. Das Smartphone kann auch weitere Schritte des Verfahrens ausführen. Das Smartphone kann bspw. die erbrachte Arbeit einer Klasse zuordnen. Dazu können auf dem Smartphone mehrere Klassen und Kriterien für die Zuordnung der Arbeit zu einer Klasse hinterlegt sein.

Generell können die Schritte des Verfahrens durch unterschiedliche Werkzeuge durchgeführt werden. Die Zuordnung der erbrachten Arbeit zu einer Klasse kann bspw. direkt vom Smartphone oder von einem in der Arbeitsmaschine verbauten Rechner durchgeführt werden. Alternativ können die Arbeitsdaten auch gespeichert und nach der Arbeit an einem Rechner die Zuordnung durchgeführt werden. Bevorzugt werden die Arbeitsdaten während er Arbeit zu einem Rechnersystem übertragen und dort die Zuordnung durchgeführt. Die Übertragung der Arbeit erfolgt bevorzugt zumindest teilweise als Funkübertragung. Das Rechnersystem ist bevorzugt ein Dokumentationssystem. Bevorzugt erstellt das Rechnersystem die Dokumentationsbuchung.

Die Bewegungsspur besteht bevorzugt aus einer sortierten Liste einer Vielzahl an Punkten. Jeder Punkt er Bewegungsspur gibt einen Ort an. Da Felder häufig streifenförmig oder spiralförmig bearbeitet werden kann aus der Bewegungsspur die Arbeitsbreite der Arbeitsmaschine bestimmt werden. Aus der Arbeitsbreite lässt sich auf die Klasse der Arbeit schließen. Auf diese Weise lässt sich basierend auf den Arbeitsdaten, insbesondere basierend auf der Bewegungsspur, die erbrachte Arbeit einer Klasse zuordnen.

Die Klasse gibt die Art der erbrachten Arbeit an. Beispiele für Klassen sind bspw. Bodenbearbeitung, Aussaat, Pflege, Pflanzenschutz, Düngung, Tiefengrubbern, Ernte, Bewässerung, Saatbettbereitung, Grünlandschnitt und ähnliches. Bevorzugt ist eine Vielzahl von Klassen vorbestimmt. Für die Zuordnung der erbrachten Arbeit zu einer Klasse sind bevorzugt Kriterien für die Analyse der Arbeitsdaten vorbestimmt. Klassen können auch vom Nutzer geändert und neu definiert werden. Ebenso können Kriterien für die Zuordnung vom Nutzer geändert und neu definiert werden.

In einer Ausgestaltung wird die Dokumentationsbuchung in einem Dokumentationserfassungssystem gebucht. Durch die Buchung in dem Dokumentationserfassungssystem sind die in der Dokumentationsbuchung enthaltenen Informationen dauerhaft gespeichert und bei Bedarf wieder abrufbar. Die Buchung kann automatisch direkt nach der Erstellung der Dokumentationsbuchung geschehen oder nach manueller Bestätigung. Vor der Buchung kann auch die Möglichkeit zur manuellen Korrektur oder Ergänzung der Dokumentationsbuchung vorgesehen sein.

In einer bevorzugten Ausgestaltung umfassen die Arbeitsdaten Informationen über den Zeitpunkt und die Dauer der erbrachten Arbeit. Die Informationen können bspw. in der Form von Anfangszeitpunkt und Endzeitpunkt vorhanden sein. Aus der Differenz der Zeitpunkte kann dann auf die Dauer der Arbeit geschlossen werden. Die Informationen können insbesondere bei der Zuordnung zu der Klasse genutzt werden. So werden einige Arbeiten nur zu bestimmten Zeiten im Jahr durchgeführt.

In einer Ausgestaltung werden in den Arbeitsdaten enthaltene Informationen zumindest teilweise in die Dokumentationsbuchung eingefügt. Die Informationen können dabei direkt oder verarbeitet in die Dokumentationsbuchung eingefügt werden. Informationen über den Zeitpunkt der Arbeit werden vorzugsweise direkt in die Dokumentationsbuchung eingefügt. Aus der Bewegungsspur wird vorzugsweise das bearbeitete Feld bestimmt und ein Name und/oder eine ID des bearbeiteten Feldes der Dokumentationsbuchung hinzugefügt.

In einer bevorzugten Ausgestaltung werden bei der Erstellung der Dokumentationsbuchung Daten aus einer Datenbank in die Dokumentationsbuchung eingefügt und/oder Daten aus der Datenbank bei der Zuordnung genutzt. In der Datenbank können bspw. die Koordinaten eines Feldes zusammen mit einer ID des Feldes und/oder einem Namen des Feldes vorhanden sein. Befindet sich eine Mindestzahl oder ein Mindestanteil der Punkte der bewegungsspur innerhalb der Koordinaten eines Feldes, wird die ID und/oder der Name des Feldes in die Dokumentationsbuchung eingefügt. In der Datenbank können auch Informationen über die auf dem Feld angebaute Frucht vorhanden sein. Diese Information kann sowohl direkt in die Dokumentationsbuchung eingefügt als auch bei der Zuordnung genutzt werden.

In einer Ausgestaltung sind in der Datenbank Informationen aus älteren Dokumentationsbuchungen vorhanden. Informationen aus älteren Dokumentationsbuchungen können sich insbesondere auf dasselbe Feld beziehen. Ist aus einer älteren Dokumentationsbuchung eine früher auf dem Feld erbrachte Arbeit bekannt, so kann diese Information bei der Zuordnung genutzt werden. Informationen aus älteren Dokumentationsbuchungen können sich auch auf dieselbe Arbeitsmaschine beziehen. Ist die letzte von der Arbeitsmaschine erbrachte Arbeit bekannt, so kann diese Information bei der Zuordnung genutzt werden.

In einer bevorzugten Ausgestaltung sind in der Datenbank Informationen über:
die Positionen für eine Vielzahl von Feldern und/oder
eine Lokalitätskategorie für eine Vielzahl von Orten und/oder
die Art der angebauten Frucht auf zumindest einem Feld und/oder
die Klasse zumindest einer früher erbrachten Arbeit auf zumindest einem Feld.

Die Positionen der Felder sind dabei vorzugsweise als Koordinaten eines globalen Satellitennavigationssystems hinterlegt. Der vom Ortsbestimmungssystem bestimmte Ort lässt sich so sehr leicht einem Feld zuordnen. Lokalitätskategorien sind bspw. Feld, Straße, Hof, Lagerstätte oder ähnliches. Der vom Ortsbestimmungssystem bestimmte Ort kann so einer Lokalitätskategorie zugeordnet werden. Die Lokalitätskategorie kann in die Dokumentationsbuchung eingefügt werden und/oder bei der Zuordnung genutzt werden.

In einer bevorzugten Ausgestaltung umfassen die Arbeitsdaten Informationen über mit der Arbeitsmaschine verbundene Anbaugeräte und die Informationen werden der Dokumentationsbuchung hinzugefügt. Informationen über mit der Arbeitsmaschine verbundene Anbaugeräte können bspw. über eine Kommunikationsverbindung zwischen Arbeitsmaschine und Anbaugerät ausgetauscht werden und von der Arbeitsmaschine den Arbeitsdaten hinzugefügt werden. Alternativ kann am Anbaugerät eine Funkbarke angebracht werden. Eine Funkbarke wird auch als Beacon bezeichnet. Die Funkbarke versendet eine Kennung, bevorzugt über Bluetooth, welche vom Smartphone des Bedieners erfasst und den Arbeitsdaten hinzugefügt wird. Die Kennung stellt eine Information über die die Art des Anbaugerätes bestimmt werden kann. Bspw. können in einer Datenbank zu jeder Kennung weitere Informationen enthalten sein. Funkbarken können auch an Lagerstätten oder anderen Orten angebracht sein. Die Kennung der Funkbarken kann über Informationen in der Datenbank einer Lokalitätskategorie zugeordnet werden.

In einer Ausgestaltung wird aus den Arbeitsdaten eine verbrauchte Menge an Arbeitsmitteln bestimmt und die verbrauchte Menge der Dokumentationsbuchung hinzugefügt. Arbeitsmittel sind bspw. Pflanzenschutzmittel, Düngemittel, Treibstoff und ähnliches. Der Verbrauch wird vorzugsweise von der Arbeitsmaschine oder vom Anbaugerät erfasst. Treibstoff kann bspw. Benzin, Diesel oder elektrischer Strom sein.

In einer bevorzugten Ausgestaltung umfassen die Arbeitsdaten Informationen über die Bewegungsgeschwindigkeit der Arbeitsmaschine an einer Vielzahl von Punkten der Bewegungsspur. Bevorzugt ist einer Vielzahl von Punkten der Bewegungsspur ein Zeitpunkt zugeordnet. Aus den Differenzen zwischen den Orten zweier Punkte und den Differenzen zwischen den Zeitpunkten der beiden Punkte kann die Geschwindigkeit der Arbeitsmaschine zwischen den Punkten bestimmt werden. Die Bewegungsgeschwindigkeit wird bevorzugt einem der beiden Punkte, zugeordnet. Vorzugsweise wird jeder Punkt mit einem Zeitstempel abgespeichert. Bevorzugt gibt der Zeitstempel dabei den Zeitpunkt an zu dem der Ort bestimmt wurde. Durch die Zeitstempel ist eine Sortierung der Punkte gegeben.

In einer Ausgestaltung umfassen die Arbeitsdaten Informationen über jeweils eine Ausrichtung der Arbeitsmaschine an einer Vielzahl von Punkten der Bewegungsspur. Die Ausrichtung kann direkt erfasst werden, bspw. über einen elektronischen Kompass im Smartphone oder indirekt aus der Bewegungsspur abgeleitet werden. Üblicherweise bewegt sich eine Arbeitsmaschine in Vorwärtsrichtung, so dass sich die Ausrichtung aus dem Differenzvektor zwischen zwei benachbarten Punkten der Bewegungsspur ergibt. Enthalten die Punkte der Bewegungsspur Zeitinformationen, so kann aus der Bewegungsspur auch die Rotationsgeschwindigkeit bestimmt werden. Informationen über die Rotationsgeschwindigkeit sind in diesem Fall bereits in den Arbeitsdaten enthalten. Alternativ kann die Rotationsgeschwindigkeit bspw. über ein Gyroskop, vorzugsweise im Smartphone, bestimmt werden. Die Rotationsgeschwindigkeit kann dann, vorzugsweise mit Zeitstempeln, den Arbeitsdaten hinzugefügt werden.

In einer Ausgestaltung erfolgt eine monetäre Bewertung der erbrachten Arbeit und die monetäre Bewertung wird der Dokumentationsbuchung hinzugefügt. Bei der monetären Bewertung wird insbesondere die Arbeitszeit, die Art der Arbeitsmaschinen und/oder die verbrauchten Arbeitsmittel bewertet.

Die Erfindung umfasst auch ein System zur automatischen Erstellung einer Dokumentationsbuchung über die erbrachte Arbeit einer landwirtschaftlichen Arbeitsmaschine, wobei das System während der Erbringung der Arbeit Arbeitsdaten erfasst, wobei das System ein Ortsbestimmungssystem umfasst, wobei das Ortsbestimmungssystem während der Erbringung der Arbeit eine Bewegungsspur der Arbeitsmaschine aufzeichnet, wobei die Arbeitsdaten zumindest die Bewegungsspur umfassen, wobei das System basierend auf den Arbeitsdaten automatisch die erbrachte Arbeit einer Klasse zuordnet, wobei das System dazu vorgesehen und eingerichtet ist ein Verfahren nach einer der oben beschriebenen Ausgestaltungen auszuführen.

Das System umfasst vorzugsweise ein Smartphone. Das Smartphone kann das Ortsbestimmungssystem umfassen. Das Smartphone kann eine Datenbank mit einer Vielzahl an Informationen enthalten. Das Smartphone kann die Arbeit einer Klasse zuordnen und die Dokumentationsbuchung erstellen.

Alternativ können die Arbeitsdaten an ein Rechnersystem übermittelt werden, wobei das Rechnersystem die Arbeit einer Klasse zuordnet und die Dokumentationsbuchung erstellt.

In einer bevorzugten Ausgestaltung weist die Arbeitsmaschine einen Kommunikationsbus weist, wobei das System Informationen vom Kommunikationsbus lesen kann, wobei Informationen vom Kommunikationsbus vom System zumindest teilweise unverändert und/oder verarbeitet der Dokumentationsbuchung hinzugefügt werden.

Informationen vom Kommunikationsbus sind bspw. Informationen über Anbaugeräte und/oder verbrauchte Arbeitsmittel.

In einer bevorzugten Ausgestaltung ist das System dazu vorgesehen und eingerichtet Informationen von Funkbarken zu empfangen, wobei Informationen der Funkbarken vom System zumindest teilweise unverändert und/oder verarbeitet der Dokumentationsbuchung hinzugefügt werden. Funkbarken können bspw. von einem zum System gehörenden Smartphone ausgelesen werden oder die Kennung der Funkbarken wird von der Arbeitsmaschine ausgelesen und den Arbeitsdaten hinzugefügt. Die Kennung kann entweder direkt den Arbeitsdaten hinzugefügt werden oder aus einer Datenbank werden der Kennung zugeordnete Informationen ausgelesen und die Informationen aus der Datenbank werden den Arbeitsdaten hinzugefügt.

Die Erfindung wird im Folgenden an einem Ausführungsbeispiel näher erläutert. Dabei zeigt
- Figur 1: eine Aufzeichnung einer Bewegungsspur einer landwirtschaftlichen Arbeitsmaschine,
- Figur 2: eine Dokumentationsbuchung.

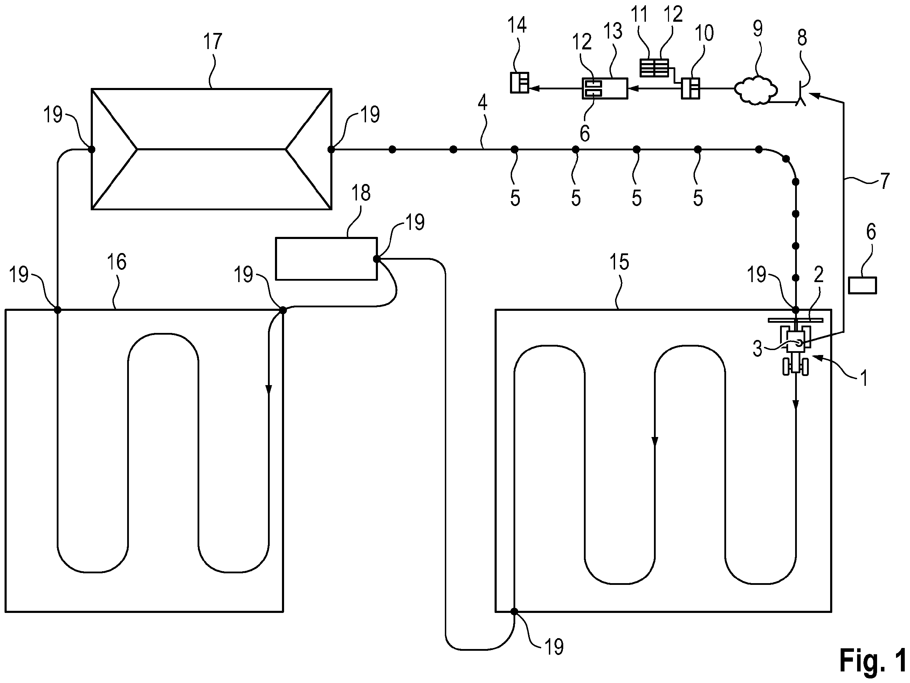

Figur 1 zeigt eine landwirtschaftliche Arbeitsmaschine 1, hier ein Traktor mit einer Feldspritze als Anbaugerät 2. Traktor und Anbaugerät können über einen Kommunikationsbus Informationen austauschen. Die Arbeitsmaschine 1 ist mit einem Ortsbestimmungssystem 3 ausgestattet. Während der Erbringung der Arbeit zeichnet das Ortsbestimmungssystem 3 eine Bewegungsspur 4 auf. Die Bewegungsspur 4 besteht aus einer sortierten Liste von Punkten 5. Jeder Punkt 5 gibt einen Ort an und wird mit einem Zeitstempel aufgezeichnet.

Die Punkte 5 der bewegungsspur 4 stellen Arbeitsdaten 6 dar. In diesem Beispiel zeichnet die Arbeitsmaschine 1 als zusätzliche Arbeitsdaten 6 den Verbrauch an Diesel und an mit der Feldspritze 2 ausgebrachtem Pflanzenschutzmittel auf. Die Arbeitsdaten 6 werden über eine Mobilfunkstrecke 7 an eine Empfängerstation 8 weitergeleitet. Von der Empfängerstation 8 werden die Arbeitsdaten 3 durch ein Netzwerk 9, bspw. das Internet, an ein Rechnersystem 10 weitergeleitet.

Auf dem Rechnersystem 10 ist eine Datenbank 11 vorhanden. Das Rechnersystem 10 bestimmt aus den Arbeitsdaten 3 und den Informationen aus der Datenbank 11 welcher Klasse 12 die Arbeit zugeordnet wird. Danach erstellt das Rechnersystem 10 eine Dokumentationsbuchung 13 und trägt in der Dokumentationsbuchung 13 die Klasse 12 der Arbeit ein. Zusätzlich trägt das Rechnersystem 10 in die Dokumentationsbuchung 13 weitere Arbeitsdaten 6 ein. In diesem Beispiel wird der Verbrauch an Diesel und Pflanzenschutzmittel in die Dokumentationsbuchung 13 eingetragen. Die Dokumentationsbuchung 13 wird in einem Dokumentationserfassungssystem 14 gebucht.

Aus den Zeitstempeln der Punkte 5 der Bewegungsspur 4 berechnet das Rechnersystem den Zeitpunkt und die Dauer der Arbeit und trägt Zeitpunkt und Dauer in die Dokumentationsbuchung 13 ein.

Die Arbeitsmaschine 1 übermittelt in den Arbeitsdaten 6 auch die Art der Arbeitsmaschine 1 und die Art des Anbaugerätes 2. Das Rechnersystem 11 nutzt diese Informationen bei der Zuordnung der Arbeit zu einer Klasse. Zusätzlich werden die Informationen der Dokumentationsbuchung 13 hinzugefügt.

In der Datenbank 11 sind auch die Positionen eines ersten Feldes 15 und eines zweiten Feldes 16 gespeichert. Zu jedem Feld 15, 16 ist auch eine ID und ein Name in der Datenbank vorhanden. Erkennt das Rechnersystem 10 an den Punkten 5 der Bewegungsspur 4, dass die Arbeit auf dem ersten Feld 15 erbracht wurde, so fügt das Rechnersystem 10 die ID und den Namen des ersten Feldes 15 der Dokumentationsbuchung 13 hinzu.

In der Datenbank 11 sind auch Lokalitätskategorien für bestimmte Orte hinterlegt, bspw. für einen Hof 17 und eine Lagerstätte 18 von Pflanzenschutzmitteln. Erkennt das Rechnersystem 10 an den Punkten 5 der Bewegungsspur 4, dass die Arbeitsmaschine 1 in der Nähe eines bestimmten Ortes war, so fügt das Rechnersystem 10 die Lokalitätskategorie des Ortes der Dokumentationsbuchung 13 hinzu.

Die Arbeitsmaschine 1 ist mein einem Lesegerät für Funkbarken 19 ausgestattet. Funkbarken 19 sind an verschiedenen Orten angebracht und senden in regelmäßigen Abständen eine Kennung aus. Empfängt das Lesegerät eine Kennung, so wird die Kennung den Arbeitsdaten 6 hinzugefügt. Das Rechnersystem 10 erkennt an der Kennung die Nähe der Arbeitsmaschine 1 zu dem Ort an dem die Funkbarke angebracht ist auch wenn die Position des Ortes nicht in der Datenbank verzeichnet ist. Eine Funkbarke 19 ist bspw. an der Lagerstätte 18 vorhanden. Weitere Funkbarken sind an Einfahrten zu den Feldern 15, 16 und dem Hof 17 vorhanden.

In der Datenbank 11 sind Informationen für die monetäre Bewertung der Arbeit vorhanden. Bspw. ist ein Stundensatz für die Arbeitsmaschine 1 vorhanden. Aus der Art der Arbeitsmaschine, der Art des Anbaugerätes und der Dauer der Arbeit bestimmt das Rechnersystem 10 eine monetäre Bewertung der Arbeit. Auch Preise für Arbeitsmittel wie Diesel und Pflanzenschutzmittel können in der Datenbank vorhanden sein und zusammen mit den Informationen über verbrauchte Arbeitsmittel in die monetäre Bewertung einfließen.

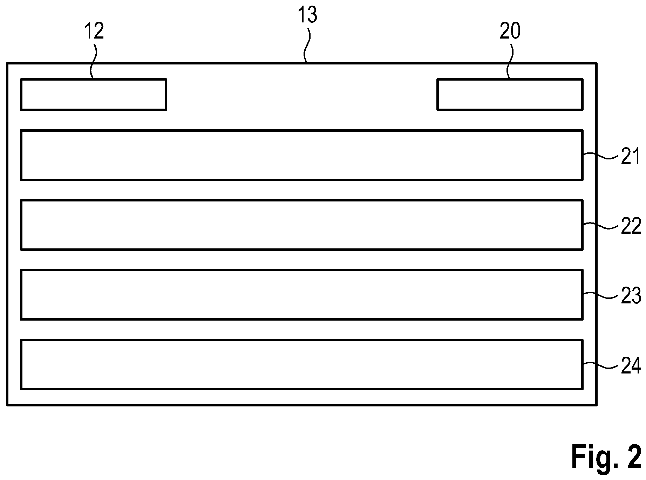

In Figur 2 ist eine Dokumentationsbuchung 13 gezeigt. In der Dokumentationsbuchung 13 ist die Klasse 12 der erbrachten Arbeit vorhanden. Daneben ist der Zeitpunkt 20 und die Dauer der Arbeit vorhanden. Anstelle der Dauer können auch Anfangszeitpunkt und Endzeitpunkt der Arbeit vorhanden sein. Die Zeitpunkte können aus den Zeitstempeln der Punkte 5 der Bewegungsspur 4 bestimmt werden. Bspw. kann als Anfangszeitpunkt der kleinste Zeitstempel aller Punkte 4 gewählt werden, die auf einem Feld 15, 16 liegen. Als Endzeitpunkt kann der größte Zeitstempel aller Punkte 4 gewählt werden, die auf demselben Feld 15, 16 liegen.

In der Dokumentationsbuchung sind die IDs 21 der bearbeiteten Felder 15, 16 vorhanden. Anstelle der IDs können auch Namen verwendet werden. Die IDs 21 können aus einem Vergleich der Punkte 5 der Bewegungsspur 4 mit Informationen über Positionen der Felder 15, 16 in der Datenbank ermittelt werden. Alternativ können die Felder über Funkbarken 19 an den Einfahrten der Felder 15, 16 erkannt werden. In der Datenbank 11 kann zu jedem Feld 15, 16 die angebaute Frucht vermerkt sein und die angebaute Frucht in die Dokumentationsbuchung 13 neben der ID eingefügt werden.

In der Dokumentationsbuchung 13 sind die verbrauchten Arbeitsmittel 22 vermerkt. Der Verbrauch kann von der Arbeitsmaschine 1, dem Anbaugerät 2 oder der Lagerstätte 18 bestimmt werden.

In der Dokumentationsbuchung 13 ist die Art 23 der Arbeitsmaschine 1 und ggf. die Art 23 des Anbaugerätes 2 vermerkt. Die Art 23 kann direkt von der Arbeitsmaschine 1 den Arbeitsdaten 6 hinzugefügt werden oder an der Arbeitsmaschine 1 und/oder dem Anbaugerät 2 wird jeweils eine Funkbarke 19 befestigt und die Kennung der Funkbarken wird ausgelesen und den Arbeitsdaten 6 hinzugefügt. Zu den Kennungen der Funkbarken 19 kann in der Datenbank 11 die jeweilige Art 23 hinterlegt sein und der Dokumentationsbuchung 13 hinzugefügt werden.

In der Dokumentationsbuchung 13 ist der Bediener 24 der Arbeitsmaschine 1 vermerkt. Der Bediener 24 kann als ID und/oder als Name in der Dokumentationsbuchung vermerkt sein. Der Bediener kann manuell den Arbeitsdaten 6 hinzugefügt werden oder der Bediener trägt eine Funkbarke 19 und die Kennung der Funkbarken wird ausgelesen und den Arbeitsdaten 6 hinzugefügt. Zu den Kennungen der Funkbarken 19 kann in der Datenbank 11 die ID und/oder der Name des Bedieners hinterlegt sein und der Dokumentationsbuchung hinzugefügt werden.

Falls für die Dokumentationsbuchung benötigte Informationen nicht automatisch bestimmt werden können, können diese vom Bediener manuell nachgetragen werden. Sollte die automatische Erkennung fehlerhaft sein, so besteht die Möglichkeit der manuellen Korrektur durch den Bediener. In der Dokumentationsbuchung kann ein Feld für manuelle Ergänzungen vorgesehen sein.

### Bezugszeichenliste

- 1: landwirtschaftliche Arbeitsmaschine
- 2: Anbaugerät
- 3: Ortsbestimmungssystem
- 4: Bewegungsspur
- 5: Ortspunkte
- 6: Arbeitsdaten
- 7: Mobilfunkstrecke
- 8: Empfängerstation
- 9: Netzwerk
- 10: Rechnersystem
- 11: Datenbank
- 12: Klasse
- 13: Dokumentationsbuchung
- 14: Dokumentationserfassungssystem
- 15: Erstes Feld
- 16: Zweites Feld
- 17: Hof
- 18: Lagerstätte
- 19: Funkbarke
- 20: Zeitpunkt
- 21: Feld ID
- 22: Arbeitsmittel
- 23: Art der Arbeitsmaschine
- 24: Bediener

## Patentansprüche

1. Verfahren zur automatischen Erstellung einer Dokumentationsbuchung (13),
wobei in der Dokumentationsbuchung (13) eine Arbeit einer landwirtschaftlichen Arbeitsmaschine (1) dokumentiert wird,
wobei während der Erbringung der Arbeit Arbeitsdaten (6) erfasst werden,
wobei ein Ortsbestimmungssystem (3) während der Erbringung der Arbeit eine Bewegungsspur (4) der Arbeitsmaschine (1) aufzeichnet,
wobei die Arbeitsdaten (6) zumindest die Bewegungsspur (4) umfassen,
**dadurch gekennzeichnet, dass**
basierend auf den Arbeitsdaten (6) automatisch die erbrachte Arbeit einer Klasse (12) zugeordnet wird,
wobei die Klasse (12) der erbrachten Arbeit automatisch in die Dokumentationsbuchung (13) eingefügt wird.

2. Verfahren nach Anspruch 1, **dadurch gekennzeichnet, dass** die Dokumentationsbuchung (1) in einem Dokumentationserfassungssystem (14) gebucht wird.

3. Verfahren nach Anspruch 1 oder 2, **dadurch gekennzeichnet, dass** die Arbeitsdaten Informationen über den Zeitpunkt und die Dauer der erbrachten Arbeit umfassen.

4. Verfahren nach einem der vorhergehenden Ansprüche, **dadurch gekennzeichnet, dass** in den Arbeitsdaten (6) enthaltene Informationen zumindest teilweise in die Dokumentationsbuchung (13) eingefügt werden.

5. Verfahren nach einem der vorhergehenden Ansprüche, **dadurch gekennzeichnet, dass** bei der Erstellung der Dokumentationsbuchung (13) Daten aus einer Datenbank (11) in die Dokumentationsbuchung (13) eingefügt werden und/oder Daten aus der Datenbank (11) bei der Zuordnung genutzt werden.

6. Verfahren nach Anspruch 5, **dadurch gekennzeichnet, dass** in der Datenbank (11) Informationen aus älteren Dokumentationsbuchungen (13) vorhanden sind.

7. Verfahren nach einem der Ansprüche 5 oder 6, **dadurch gekennzeichnet, dass** in der Datenbank (11) Informationen sind über:
die Positionen für eine Vielzahl von Feldern (15, 16) und/oder
eine Lokalitätskategorie für eine Vielzahl von Orten (15, 16, 17, 18) und/oder
die Art der angebauten Frucht auf zumindest einem Feld (15, 16) und/oder
die Klasse zumindest einer früher erbrachten Arbeit auf zumindest einem Feld (15, 16).

8. Verfahren nach einem der vorhergehenden Ansprüche, **dadurch gekennzeichnet, dass** die Arbeitsdaten (6) Informationen über mit der Arbeitsmaschine (1) verbundene Anbaugeräte (2) umfassen und die Informationen der Dokumentationsbuchung (13) hinzugefügt werden.

9. Verfahren nach einem der vorhergehenden Ansprüche, **dadurch gekennzeichnet, dass** aus den Arbeitsdaten (6) eine verbrauchte Menge an Arbeitsmitteln 22 bestimmt wird und die verbrauchte Menge der Dokumentationsbuchung (13) hinzugefügt wird.

10. Verfahren nach einem der vorhergehenden Ansprüche, **dadurch gekennzeichnet, dass** die Arbeitsdaten (6) Informationen über die Bewegungsgeschwindigkeit der Arbeitsmaschine (1) an einer Vielzahl von Punkten (5) der Bewegungsspur (4) umfassen.

11. Verfahren nach einem der vorhergehenden Ansprüche, **dadurch gekennzeichnet, dass** die Arbeitsdaten (6) Informationen über jeweils eine Ausrichtung der Arbeitsmaschine (1) an einer Vielzahl von Punkten (5) der Bewegungsspur (4) umfassen.

12. Verfahren nach einem der vorhergehenden Ansprüche, **dadurch gekennzeichnet, dass** eine monetäre Bewertung der erbrachten Arbeit erfolgt und die monetäre Bewertung der Dokumentationsbuchung (13) hinzugefügt wird.

13. System zur automatischen Erstellung einer Dokumentationsbuchung (13) über die erbrachte Arbeit einer landwirtschaftlichen Arbeitsmaschine (1),
wobei das System während der Erbringung der Arbeit Arbeitsdaten (6) erfasst,
wobei das System ein Ortsbestimmungssystem (3) umfassend,
wobei das Ortsbestimmungssystem (3) während der Erbringung der Arbeit eine Bewegungsspur (4) der Arbeitsmaschine (1) aufzeichnet,
wobei die Arbeitsdaten (6) zumindest die Bewegungsspur (4) umfassen, **dadurch gekennzeichnet, dass** das System basierend auf den Arbeitsdaten (6) automatisch die erbrachte Arbeit einer Klasse (12) zuordnet,
wobei das System dazu vorgesehen und eingerichtet ist ein Verfahren nach einem der vorhergehenden Ansprüche auszuführen.

14. System nach Anspruch 13, **dadurch gekennzeichnet, dass**
die Arbeitsmaschine (1) einen Kommunikationsbus aufweist,
wobei das System Informationen vom Kommunikationsbus lesen kann,
wobei Informationen vom Kommunikationsbus vom System zumindest teilweise unverändert und/oder verarbeitet der Dokumentationsbuchung (13) hinzugefügt werden.

15. System nach Anspruch 13 oder 14, **dadurch gekennzeichnet, dass** das System dazu vorgesehen und eingerichtet ist Informationen von Funkbarken (19) zu empfangen, wobei Informationen der Funkbarken (19) vom System zumindest teilweise unverändert und/oder verarbeitet der Dokumentationsbuchung (13) hinzugefügt werden.
